# EUROPEAN PATENT SPECIFICATION

(11) **EP 2 098 694 B1**
(45) Date of publication and mention of the grant of the patent: **09.11.2011**
(21) Application number: 07850966.8
(22) Date of filing: 20.12.2007
(51) Int. Cl.: F01N 3/08, B01D 53/94, F01N 3/22, F01N 3/24, F01N 3/28, F01N 3/30, F02D 41/14, F02D 43/00, F02D 45/00

(54) **EXHAUST GAS PURIFYING APPARATUS FOR INTERNAL COMBUSTION ENGINE**
ABGASREINIGUNGSVORRICHTUNG FÜR BRENNKRAFTMOTOR
APPAREIL DE PURIFICATION DE GAZ D'ÉCHAPPEMENT POUR MOTEUR THERMIQUE

(30) Priority: 28.12.2006 JP 2006356226
(43) Date of publication of application: 09.09.2009
(73) Proprietor: Toyota Jidosha Kabushiki Kaisha, Toyota-shi Aichi 471-8571 (JP)
(72) Inventor: HIRATA, Hirohito, Toyota-shi Aichi 471-8571 (JP); IBE, Masaya, Toyota-shi Aichi 471-8571 (JP); OSAKI, Mayuko, Toyota-shi Aichi 471-8571 (JP); KAMADA, Masaya, Toyota-shi Aichi 471-8571 (JP)
(74) Representative: Winter, Brandl, Fürniss, Hübner, Röss, Kaiser, Polte - Partnerschaft
(86) International application number: PCT/JP2007/074531
(87) International publication number: WO 2008/081734

(56) References cited:
- WO-A2-2006/117993
- FR-A1- 2 851 609
- JP-A- 2000 054 833
- JP-A- 2002 089 246
- JP-B- 06 016 818
- JP-U- 63 026 748

## Description

### Technical Field

The present invention relates to an exhaust emission control apparatus for an internal combustion engine.

### Background Art

It is known that a conventional exhaust emission control apparatus disclosed, for instance, in JP-A-2002-89246 includes a NOx trap catalyst. In the above conventional art, an exhaust path of an internal combustion engine is provided with a catalyst and a substance for adsorbing NOx (hereinafter also referred to as the NOx adsorption substance) or a substance for occluding NOx (hereinafter also referred to as the NOx retention substance). Such a configuration is formed so that NOx in an exhaust gas is trapped by the NOx trap catalyst in a lean atmosphere, and that the trapped NOx is reduced and decomposed in a rich atmosphere.

To ensure that the above reaction smoothly takes place, it is necessary that the catalyst reach its activation temperature and fully exercise a catalyst activation function. When an internal combustion engine starts up, however, the catalyst temperature is low. Thus, the above conventional exhaust emission control apparatus addresses this problem by adding ozone (O₃) to the exhaust gas at internal combustion engine startup.

A NOx trap reaction occurs more actively in an atmosphere where NO₂ is abundant than in an atmosphere where NO is abundant. Adding ozone to the exhaust gas oxidizes NO in the exhaust gas to increase the amount of NO₂. Consequently, even when the catalyst is not fully active at the time, for instance, of internal combustion engine startup, the use of the above-described conventional technology makes it possible to increase the amount of NO₂ flowing into the NOx trap catalyst and trap NOx with high efficiency, thereby purifying the exhaust gas effectively.
Document FR 2 851 609 A1 discloses an apparatus for treating nitrogenous exhaust gas of internal combustion engines, particularly during engine start up. Since especially at that time the temperature of the catalyst is low and hence also its conversion rate is low, a NOx oxidation gas is supplied to the exhaust gas, such as ozone in order to reduce the emission also during start up.

Patent Document 1: JP-A-2002-89246
Patent Document 2: JP-A-5-192535
Patent Document 3: JP-A (PCT) No. 538295/2005
Patent Document 4: JP-A-6-185343
Patent Document 5: JP-A-10-169434
Patent Document 6: Japanese Patent No. 3551346

### Disclosure of the Invention

### Problem to be Solved by the Invention

However, energy is required for ozone generation. Therefore, no extra ozone should be added to the exhaust gas.

The present invention has been made to solve the above problem. An object of the present invention is to provide an exhaust emission control apparatus that is used with an internal combustion engine to permit efficient use of ozone when ozone is added to an exhaust gas.

### Means for Solving the Problem

To achieve the above-mentioned purpose, the first aspect of the present invention is an exhaust emission control apparatus for an internal combustion engine, comprising:
a NOx occlusion reduction type catalyst, which is positioned in an exhaust path of the internal combustion engine and includes a NOx retention substance and a catalyst active site;
air supply means, which supplies air so that the air mixes with an exhaust gas flowing into the NOx occlusion reduction type catalyst;
ozone supply means, which supplies ozone (O₃) so that the ozone mixes with the exhaust gas flowing into the NOx occlusion reduction type catalyst;
ozone supply control means, which causes the ozone supply means to supply ozone when a temperature of the NOx occlusion reduction type catalyst is lower than a temperature at which a NOx occlusion acceleration effect is produced by the air supply, and suppresses or shuts off the ozone supply after the temperature of the NOx occlusion reduction type catalyst reaches the temperature at which the NOx occlusion acceleration effect is produced by the air supply; and
air supply control means, which causes the air supply means to start supplying air at the latest by the time the ozone supply is suppressed or shut off.

The second aspect of the present invention is the exhaust emission control apparatus for the internal combustion engine according to the first aspect, wherein the air supply control means shuts off the air supply while the ozone supply control means is supplying ozone, and starts supplying air when the ozone supply control means shuts off the ozone supply.

The third aspect of the present invention is the exhaust emission control apparatus for the internal combustion engine according to the first or the second aspect, further comprising:
an exhaust gas sensor, which is positioned downstream of the NOx occlusion reduction type catalyst;
first injection amount control means, which exercises open-loop control over a fuel injection amount of the internal combustion engine; and
second injection amount control means, which feeds the output of the exhaust gas sensor back to the fuel injection amount so that the exhaust gas flowing out of the NOx occlusion reduction type catalyst has a stoichiometric air-fuel ratio, and exercises closed-loop control over the fuel injection amount; wherein
the air supply control means causes the air supply means to shut off the air supply after the temperature of the NOx occlusion reduction type catalyst is raised to a level not lower than an activation temperature for purifying the exhaust gas,
the first injection amount control means exercise fuel injection amount control while the air supply means is supplying air, and
the fuel injection amount control mode of the internal combustion engine is changed from control by the first injection amount control means to control by the second injection amount control means when the air supply means shuts off the air supply.

The fourth aspect of the present invention is the exhaust emission control apparatus for the internal combustion engine according to any one of the first to third aspects, further comprising:
ozone supply amount adjustment means, which adjusts the amount of ozone supply so that the molar quantity of ozone to be added to the exhaust gas is greater than the molar quantity of nitrogen monoxide (NO) contained in the exhaust gas.

The fifth aspect of the present invention is the exhaust emission control apparatus for the internal combustion engine according to the fourth aspect, wherein the ozone supply amount adjustment means controls the ozone supply means so that the molar quantity of ozone to be added to the exhaust gas is at least two times the molar quantity of nitrogen monoxide (NO) contained in the exhaust gas.

A background aspect of the present invention is an exhaust emission control apparatus for an internal combustion engine, comprising:
a NOx occlusion reduction type catalyst, which is positioned in an exhaust path of the internal combustion engine and includes a NOx retention substance and a catalyst active site;
NOx oxidation gas supply means, which supplies a NOx oxidation gas so that the NOx oxidation gas mixes with an exhaust gas flowing into the NOx occlusion reduction type catalyst;
an exhaust gas sensor, which is positioned downstream of the NOx occlusion reduction type catalyst;
first injection amount control means, which exercises open-loop control over a fuel injection amount of the internal combustion engine; and
second injection amount control means, which feeds the output of the exhaust gas sensor back to the fuel injection amount so that the exhaust gas flowing out of the NOx occlusion reduction type catalyst has a stoichiometric air-fuel ratio, and exercises closed-loop control over the fuel injection amount; wherein
the NOx oxidation gas supply means stops supplying the NOx oxidation gas after a temperature of the NOx occlusion reduction type catalyst is raised to a level not lower than an activation temperature for purifying the exhaust gas,
the first injection amount control means exercise fuel injection amount control while the NOx oxidation gas supply means is supplying the NOx oxidation gas, and
the fuel injection amount control mode of the internal combustion engine is changed from control by the first injection amount control means to control by the second injection amount control means when the NOx oxidation gas supply means shuts off the NOx oxidation gas supply.

### Advantages of the Invention

The first aspect of the present invention makes it possible to use ozone with high efficiency by supplying air to accelerate NOx occlusion with the use of ozone suppressed or stopped in a situation where the air supply can produce a NOx occlusion acceleration effect.

The second aspect of the present invention makes it possible to supply ozone and air with high efficiency by changing a NOx occlusion acceleration gas from ozone to air in a situation where the air supply can produce a NOx occlusion acceleration effect.

According to the third aspect of the present invention, ozone can be used with high efficiency. Further, even in a situation where the air-fuel ratio of an exhaust gas is affected by the release of NOx that is occluded by a NOx occlusion reduction type catalyst, the third aspect of the present invention makes it possible to adjust the air-fuel ratio of the exhaust gas properly and maintain excellent emission characteristics.

According to the fourth aspect of the present invention, NO in the exhaust gas can be oxidized to generate NO₃, N₂O₅, and other nitrogen oxides of higher order than NO₂ (generate HNO₃ as well if water exists). This makes it possible to increase the amounts of NO₃, N₂O_{5,} and other nitrogen oxides of higher order than NO₂, which are included in the exhaust gas that flows into a NOx retention member. As a result, a NOx occlusion reaction can be accelerated to increase the exhaust gas purification capacity.

According to the fifth aspect of the present invention, a sufficient amount of ozone can be supplied as needed to generate NO₃, N₂O₅, and other nitrogen oxides of higher order than NO₂ (generate HNO₃ as well if water exists) by oxidizing NO. As a result, the NOx occlusion reaction can be effectively accelerated to increase the exhaust gas purification capacity.

Even in a situation where the air-fuel ratio of the exhaust gas is affected by the release of NOx that is occluded by a NOx occlusion reduction type catalyst, the background aspect of the present invention makes it possible to adjust the air-fuel ratio of the exhaust gas properly and maintain excellent emission characteristics.

### Brief Description of the Drawings

Fig. 1 is a diagram illustrating an exhaust emission control apparatus for an internal combustion engine according to a first embodiment of the present invention.
Fig. 2 is a diagram to describe the content of the experiment for the exhaust emission control apparatus according to the first embodiment.
Fig. 3 is a diagram to describe the content of the experiment for the exhaust emission control apparatus according to the first embodiment.
Fig. 4 is a diagram to describe the content of the experiment for the exhaust emission control apparatus according to the first embodiment.
Fig. 5 is a flowchart illustrating a routine that is executed in the first embodiment.
Fig. 6 is a diagram to describe the modification of the first embodiment.
Fig. 7 is a diagram illustrating an exhaust emission control apparatus according to a second embodiment of the present invention.
Fig. 8 is a flowchart illustrating a routine that is executed in the second embodiment.
Fig. 9 is a flowchart illustrating the routine that is executed in an unclaimed third embodiment of the present invention.

### [Description of Notations]

- 10: an internal combustion engine
- 12: an exhaust path
- 20: a catalytic device
- 22: A NOx occlusion reduction type catalyst
- 30: a NOx oxidation gas supply device
- 32: a gas injection orifice
- 34: an air inlet

- 50: ECU
- 60: a temperature sensor
- 70: an air-fuel ratio sensor
- 322: a NOx retention member
- 324: a catalyst

### Best Mode of Carrying Out the Invention

### First Embodiment

### [Configuration of First Embodiment]

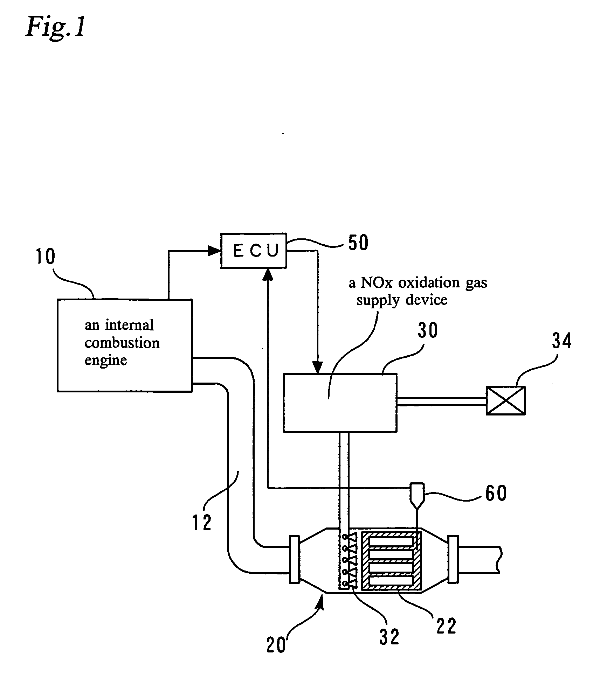

Fig. 1 is a diagram illustrating an exhaust emission control apparatus according to a first embodiment of the present invention. As shown in Fig. 1, the exhaust emission control apparatus according to the first embodiment includes a catalytic device 20, which is placed in an exhaust path 12 of an internal combustion engine 10. A NOx occlusion reduction type catalyst 22 is placed in the catalytic device 20. In the exhaust emission control apparatus configured as described above, an exhaust gas passing through the exhaust path 12 flows into the catalytic device 20 and then into the NOx occlusion reduction type catalyst 22.

The NOx occlusion reduction type catalyst 22 is configured so that Pt or other noble metal and BaCO₃ are supported by a ceramic support. Pt functions as an active site that simultaneously activates the oxidation reaction of CO and HC and the reduction reaction of NOx. BaCO₃ functions as a NOx retention substance that occludes NOx in the exhaust gas as nitrate.

More specifically, BaCO₃ occludes NOx as Ba(NO₃)2· The occluded Ba(NO₃)₂ is reduced and decomposed mainly when the exhaust gas is rich. The configuration and function of the NOx occlusion reduction type catalyst will not be described in detail because they are publicly known (disclosed, for instance, in Japanese Patent No. 3551346).

The following explanation assumes that the term "catalyst" refers to a combination of the noble metal (Pt or the like in the first embodiment) and a portion of the support that supports the noble metal. It is also assumed that the term "NOx retention member" refers to a combination of the NOx retention substance and a portion of the support that supports the NOx retention substance. The NOx occlusion reduction type catalyst 22 is formed by integrating or layering the "catalyst" and "NOx retention member."

The exhaust emission control apparatus according to the first embodiment includes a NOx oxidation gas supply device 30. The NOx oxidation gas supply device 30 is in communication with an air inlet 34. The NOx oxidation gas supply device 30 includes an ozone generator, which generates ozone. When the ozone generator turns ON, air is obtained from the air inlet 34 to generate ozone (O₃) and supply it downstream. When the ozone generator turns OFF, air is taken in from the air inlet 34 and supplied downstream. The configuration, function, and other characteristics of the ozone generator, which generates ozone, will not be described in detail because a variety of related technologies are publicly known.

The NOx oxidation gas supply device 30 has a gas injection orifice 32, which injects a gas within the catalytic device 20. The gas injection orifice 32 is positioned upstream of the NOx occlusion reduction type catalyst 22 in the catalytic device 20. When this configuration is employed to inject ozone from the gas injection orifice 32, the ozone or air can be added to the exhaust gas passing through the exhaust path 12. The added ozone or air then mixes with the exhaust gas so that the resulting gas mixture flows into the NOx occlusion reduction type catalyst 22 (the subsequent explanation assumes that "supplying ozone or air so that it mixes with the exhaust gas" is equivalent to "adding ozone or air to the exhaust gas").

To induce the above NOx occlusion reaction with high efficiency, it is preferred that NOx in the exhaust gas be oxidized to a greater extent. In the first embodiment, the NOx oxidation gas supply device 30 can be used as needed to add air and ozone to the exhaust gas. Thus, the NOx in the exhaust gas can be oxidized to effectively purify the exhaust gas. In the subsequent explanation, a gas containing the components contributing toward NOx oxidation may be referred to as the "NOx oxidation gas."

The exhaust emission control apparatus according to the first embodiment includes an ECU (Electronic Control Unit) 50. The ECU 50 is connected to the NOx oxidation gas supply device 30. The ECU 50 transmits a control signal to the NOx oxidation gas supply device 30 for the purpose of controlling the timing and amount of NOx oxidation gas injection. The use of the above-described configuration makes it possible to supply the NOx oxidation gas at desired timing.

Further, the ECU 50 is connected to various sensors and like devices attached to the internal combustion engine 10. Therefore, the ECU 50 can acquire various information such as the temperature, engine speed Ne, air-fuel ratio A/F, load, and intake air amount of the internal combustion engine 10.

Moreover, in the first embodiment, a temperature sensor 60 is connected to the NOx occlusion reduction type catalyst 22. The temperature sensor 60 is connected to the ECU 50. In accordance with an output generated from the temperature sensor 60, the ECU 50 can detect the temperature of the catalyst included in the NOx occlusion reduction type catalyst 22.

### [Operation of First Embodiment]

For smooth occlusion and reduction of NOx, it is essential that the temperature of the catalyst (or the active site in a precise sense) included in the NOx occlusion reduction type catalyst 22 be raised to a level at which a catalyst activation function can be fully exercised. However, if the catalyst is at a low temperature when, for instance, the internal combustion engine 10 starts up (particularly at a low temperature), it is difficult to utilize the catalyst activation function. Consequently, the apparatus according to the first embodiment adds ozone to the exhaust gas by using the NOx oxidation gas supply device 30 when the internal combustion engine 10 starts up. This makes it possible to effectively purify the exhaust gas even when the catalyst is not fully active.

The first embodiment generates ozone by using the ozone generator in the NOx oxidation gas supply device 30. In general, such ozone generation requires appropriate energy. It goes without saying that the amount of required energy increases with an increase in the amount of ozone addition to the exhaust gas. Therefore, the addition of an excessive amount of ozone to the exhaust gas should be avoided.

In view of the above circumstances, the inventors of the present invention conducted an experiment and found that the NOx occlusion reaction can also be accelerated by adding air to the exhaust gas in a situation where the catalyst temperature is not lower than a certain level. On the basis of such finding, the first embodiment switches between the supply of air and the supply of ozone in accordance with the catalyst temperature.

More specifically, the NOx oxidation gas supply device 30 supplies ozone when the catalyst temperature detected by the temperature sensor 60 is lower than a temperature at which the NOx occlusion acceleration effect is produced by supplying air. When the catalyst temperature is not lower than the temperature at which the NOx occlusion acceleration effect is produced by supplying air, the NOx oxidation gas supply device 30 stops the supply of ozone and switches to the supply of air.

Consequently, the use of ozone can be stopped to minimize the amount of ozone use in a situation where the NOx occlusion acceleration effect can be produced by supplying air. This makes it possible to use ozone with high efficiency and reduce the energy required for ozone generation.

### [Results of Experiment for First Embodiment]

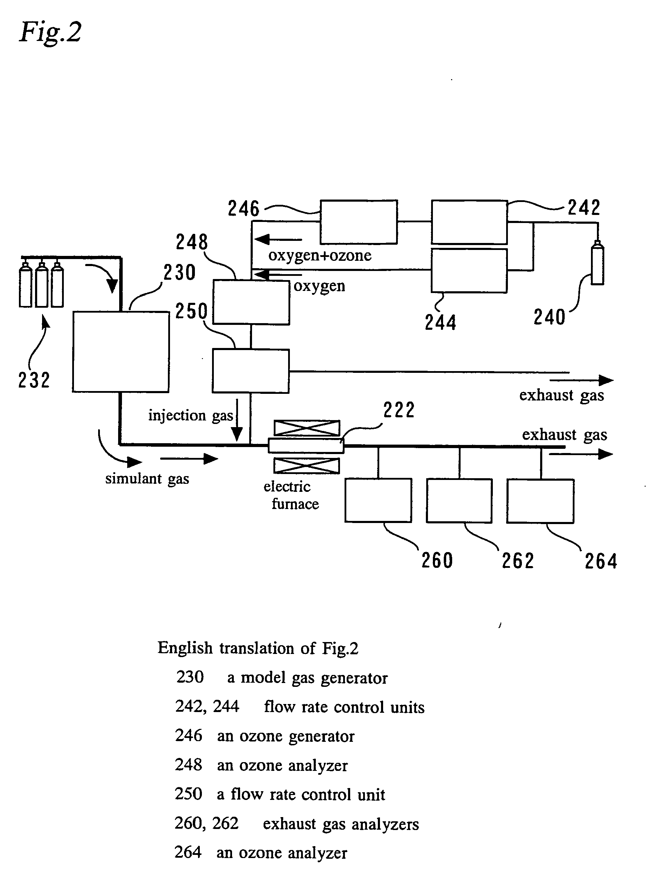

Results of experiment for the first embodiment of the present invention will now be described with reference to Figs. 2 to 4. The experiment was conducted to determine how NOx occlusion is affected by the supply of O₃ and air and by the catalyst temperature.

### (Configuration of Measurement System)

Fig. 2 shows a measurement system that was used for the experiment. The measurement system includes a model gas generator 230 and a plurality of gas cylinders 232 in order to generate a model gas, which represents the exhaust gas of an internal combustion engine. The model gas generator 230 can mix the gases in the gas cylinders 232 to create the following simulant gas:
Simulant gas composition
C₃H₆ , 1000 ppm
CO, 7000 ppm
NO, 1500 ppm
O₂, 7000 ppm
CO₂, 10%
H₂O, 3%
Remainder, N₂

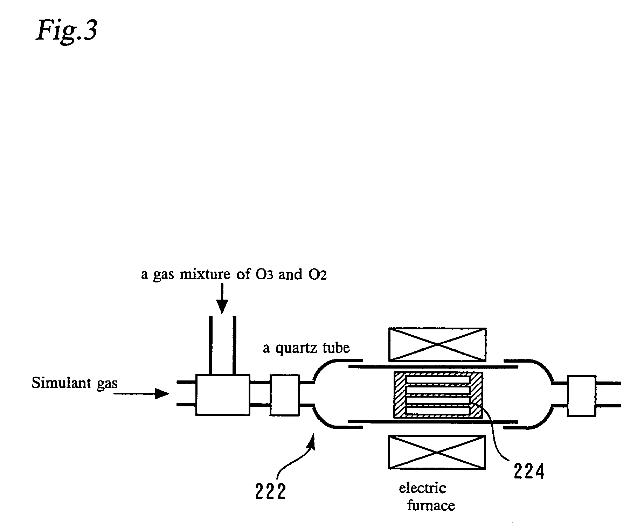

The model gas generator 230 is in communication with an electric furnace in which a NOx occlusion reduction type catalyst test piece 222 is placed. Fig. 3 is an enlarged view of the NOx occlusion reduction type catalyst test piece 222 and its vicinity. The NOx occlusion reduction type catalyst test piece 222 is configured so that a NOx occlusion reduction type catalyst sample 224 is housed in a quartz tube.

The NOx occlusion reduction type catalyst sample 224 for use in the experiment was created by performing the procedure described below. A coat of γ-Al₂O₃ was applied to a 30 mm diameter, 50 mm long, 4 mil/400 cpsi cordierite honeycomb. The coating amount was 120 g/L. Barium acetate was then adsorptively supported on the resulting cordierite honeycomb and fired for two hours at 500°C.

The support quantity of barium acetate was 0.1 mol/L. The catalyst prepared in the above manner was immersed in a solution containing ammonium hydrogen carbonate and then dried at 250°C. Further, Pt was supported with a water solution containing dinitro-diammine platinum, dried, and fired for one hour at 450°C. The support quantity of platinum was 2 g/L.

The measurement system shown in Fig. 3 includes an oxygen cylinder 240. The downstream end of the oxygen cylinder 240 is in communication with flow rate control units 242, 244. The flow rate control unit 242 is in communication with an ozone generator 246. The ozone generator 246 receives oxygen, which is supplied from the oxygen cylinder 240, and generates ozone. The ozone generator 246 communicates with the downstream end of the model gas generator 230 and the upstream end of the NOx occlusion reduction type catalyst test piece 222 through an ozone analyzer 248 and a flow rate control unit 250.

Meanwhile, the downstream end of the flow rate control unit 244 directly communicates with the ozone analyzer. In a situation where the above-described configuration is employed, turning ON the ozone generator 246 supplies a gas mixture of O₃ and O₂ to the upstream end of the NOx occlusion reduction type catalyst test piece 222 whereas turning OFF the ozone generator 246 supplies only O₂ to the upstream end of the NOx occlusion reduction type catalyst test piece 222.

When the flow rate control units 242, 244 and the ozone generator 246 are used as appropriate, the measurement system shown in Fig. 3 makes it possible to create the following two types of gases, which differ in composition. Each of these gases is to be injected into the NOx occlusion reduction type catalyst test piece 222 and will be hereinafter simply referred to as an "injection gas." Injection gas composition
(1) O₃, 30,000 ppm; remainder, O₂
(2) O₂ only
The flow rate control unit 250 can supply the injection gas at a desired flow rate.

Exhaust gas analyzers 260, 262 and an ozone analyzer 264 are positioned downstream of the NOx occlusion reduction type catalyst test piece 222. These analyzers can measure gas components that flow out of the NOx occlusion reduction type catalyst test piece 222.

The following measuring instruments were used during the experiment:
Ozone generator 246; Iwasaki Electric, OP100W
Ozone analyzer 248 (upstream); Ebara Jitsugyo, EG600
Ozone analyzer 264 (downstream); Ebara Jitsugyo, EG2001B
Exhaust gas analyzers 260, 262; Horiba, MEXA9100D (HC/CO/NOx
measurement); Horiba, VAI-510 (CO₂ measurement)

### (Description of Experiment)

In the measurement system described above, the aforementioned simulant gas and injection gas were combined and supplied to the NOx occlusion reduction type catalyst test piece 222 under the following conditions. The electric furnace was controlled so that the catalyst temperature rose at the following rate. Temporal changes in the concentration of NOx that flowed downstream were then determined.
Temperature: 30°C to 500°C
Temperature rise rate: 10°C/min (constant)
Simulant gas flow rate: 15 L/min
Injection gas flow rate: 3 L/min
Mixed gas compositions (three types):
(1) Ozone and oxygen were both added to the simulant gas.
(2) Only oxygen was added to the simulant gas (air addition simulated).
(3) Simulant gas only (stoichiometric purification simulated).
At a temperature of 300°C or higher, only the simulant gas was distributed without supplying the injection gas.

### (Results of Experiment)

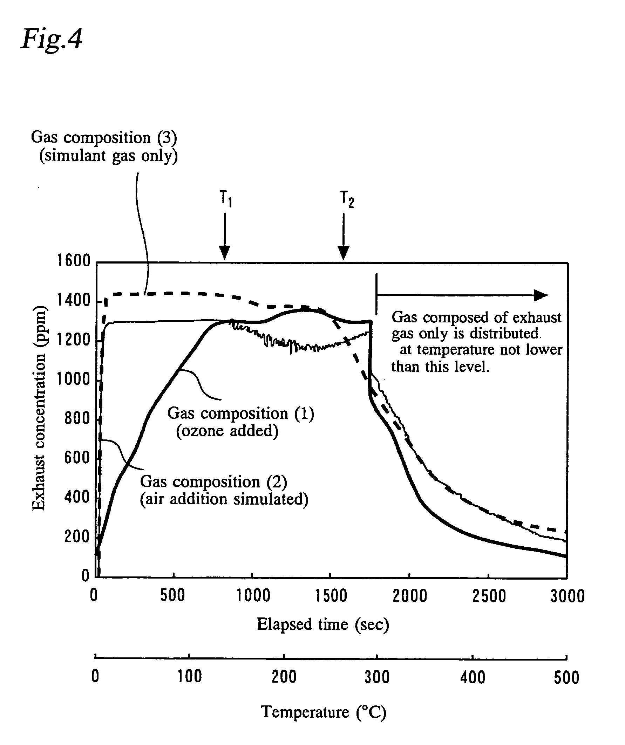

Fig. 4 is a diagram illustrating temporal changes in the NOx concentration, which were determined in the above experiment. When gas composition (1) (thick line) or gas composition (2) (thin line) was employed, the overall gas quantity increased due to the supply of the injection gas. Therefore, the NOx concentration measured by the gas analyzers was low. The temperature scale values along the horizontal axis in Fig. 4 were roughly estimated from the temperature rise rate.

The results shown in Fig. 4 indicate that the NOx exhaust concentration decreased in a low temperature region only when gas composition (1) was employed to supply ozone. In a region where the temperature was not lower than T₁, however, the NOx concentration decreased when gas composition (2) was employed to supply oxygen only. It reveals that if air is added to the exhaust gas while the catalyst is in a temperature region where the temperature is not lower than T₁, the NOx occlusion reaction is accelerated (that is, the NOx occlusion acceleration effect is produced).

In a region where the temperature was not lower than T₂, the NOx concentration decreased even when gas composition (3) (broken line) was employed to distribute only the simulant gas without supplying ozone or oxygen. It can therefore be concluded that three-way catalytic activity is achieved in the NOx occlusion reduction type catalyst 22 in a region where the temperature was not lower than T₂.

### [Details of Process Performed by First Embodiment]

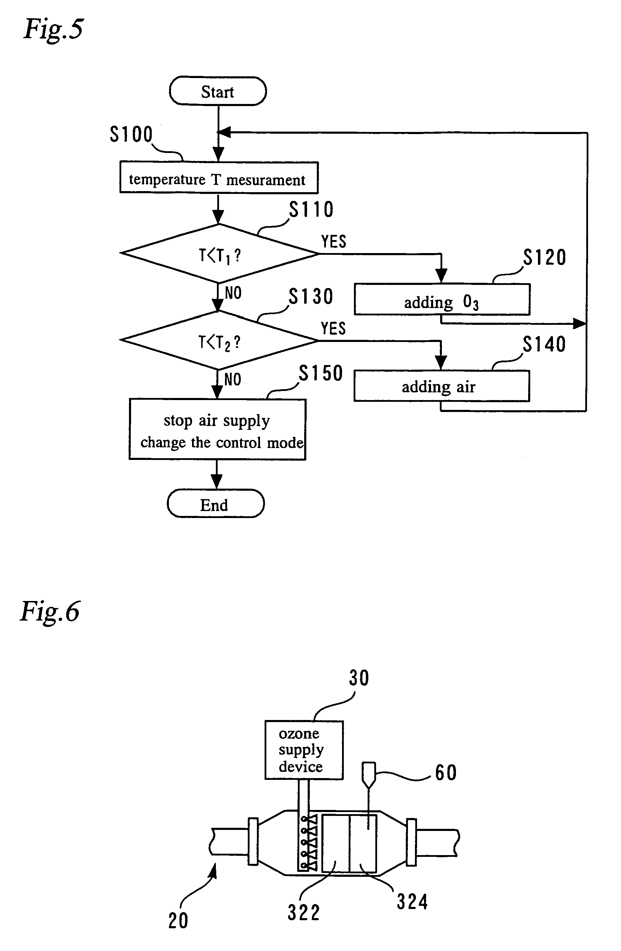

A process performed by the apparatus according to the first embodiment will now be described in detail with reference to Fig. 5. Fig. 5 is a flowchart illustrating a routine that is executed in the first embodiment. The routine is executed when the internal combustion engine 10 starts at a low temperature (e.g., at a cold start). The first embodiment assumes that the value T₁ (the temperature at which the NOx occlusion acceleration effect is produced by the supply of air) and the value T₂ (the temperature at which three-way catalytic activity is achieved) are predetermined and stored in the ECU 50.

It is presumed that the routine uses the values T₁ and T₂ to control the NOx oxidation gas supply device 30 in accordance with the catalyst temperature. In the subsequent explanation, the value T₂ may be referred to as the "catalyst activation temperature." The first embodiment also assumes that the fuel injection amount is open-loop controlled to perform a stoichiometric operation while the NOx oxidation gas is supplied at internal combustion engine startup.

First of all, the routine shown in Fig. 5 performs step S100 so that the ECU 50 acquires an output from the temperature sensor 60 and detect the temperature of the NOx occlusion reduction type catalyst 22 (hereinafter referred to as the catalyst temperature T) in accordance with the acquired output.

Next, the routine performs step S120 to judge whether the catalyst temperature T is lower than T₁. If the obtained judgment result indicates that the catalyst temperature T is lower than T₁, the routine concludes that the catalyst has not reached a temperature at which the NOx occlusion acceleration effect is produced by the supply of air. In this instance, therefore, the routine performs step S120 to issue an ozone supply instruction to the NOx oxidation gas supply device 30 so that ozone is added to the exhaust gas. Subsequently, the routine performs step S100 again so that ozone is continuously supplied until the catalyst temperature T is equal to or higher than T₁.

If the judgment result obtained in step S110 indicates that the catalyst temperature T is not lower than T₁, the routine concludes that the catalyst is in a state where the NOx occlusion acceleration effect is produced by the supply of air. In this instance, the routine proceeds to step S130 and judges whether the catalyst temperature T is lower than the catalyst activation temperature T₂.

If the above condition is established, the routine concludes that the catalyst temperature T is not lower than T₁ and is lower than T₂. In this instance, the routine proceeds to step S140 and controls the NOx oxidation gas supply device 30 to add air to the exhaust gas. Subsequently, the routine performs steps S100 and beyond again so that air is continuously supplied until the catalyst temperature T reaches the catalyst activation temperature T₂.

If, on the other hand, the judgment result obtained in step S130 indicates that the catalyst temperature T is not lower than the catalyst activation temperature T₂, the routine concludes that the catalyst is in a state where the NOx can be purified without receiving the supply of NOx oxidation gas (air, ozone). In this instance, the routine performs step S150 to shut off the supply of air and control the fuel injection amount so that the air-fuel ratio of the exhaust gas becomes slightly rich for the purpose of reducing and releasing the occluded NOx. Subsequently, the routine comes to an end.

When the above process is performed, the exhaust gas can be purified by supplying O₃ to accelerate the NOx occlusion reaction even if the NOx occlusion reduction type catalyst 22 is not fully active at startup of the internal combustion engine 10. Further, the gas to be supplied from the NOx oxidation gas supply device 30 can be changed to air in a situation where the catalyst temperature is not lower than a temperature at which the NOx occlusion acceleration effect is produced by the supply of air. This makes it possible to minimize the amount of ozone use for efficient ozone use and reduce the amount of energy required for ozone generation.

In the first embodiment, which has been described above, the internal combustion engine 10 and exhaust path 12 respectively correspond to the "internal combustion engine" and "exhaust path" according to the first aspect of the present invention; and the NOx occlusion reduction type catalyst 22 corresponds to the "NOx occlusion reduction type catalyst" according to the first aspect of the present invention. Further, the NOx oxidation gas supply device 30 corresponds to the "air supply means" and "ozone supply means" according to the first aspect of the present invention. The "ozone supply control means" and "air supply control means" according to the first aspect of the present invention are implemented when steps S100 to S140 of the process detailed above are performed. The value T₁, which has been described in connection with the results of experiment for the first embodiment, corresponds to "a temperature at which a NOx occlusion acceleration effect is produced by the air supply" according to the first aspect of the present invention.

Moreover, in the first embodiment, which has been described above, performing steps S100 to S140 implements an operation that is conducted in accordance with the second aspect of the present invention to "shut off the air supply while ozone is supplied by the ozone supply control means and start supplying air when the ozone supply is shut off by the ozone supply control means."

### [Modifications of First Embodiment]

### (First Modification)

The first embodiment starts supplying air when the catalyst temperature reaches T₁, which is defined in connection with the above-described experiment, that is, reaches a minimum temperature at which the NOx occlusion acceleration effect is produced by the supply of air. When the catalyst temperature T is not lower than T₁, the configuration employed in the first embodiment immediately changes the NOx oxidation gas to be supplied so that air is supplied in place of ozone. However, the present invention is not limited to the use of such a configuration. An alternative is to increase the temperature region as needed for ozone supply (retard the timing of switching from ozone supply to air supply) by starting the air supply at a temperature higher than T₁.

In other words, the supply of ozone need not always be shut off immediately after the catalyst temperature T exceeds the minimum temperature at which the NOx occlusion acceleration effect is produced by the supply of air. The supply of ozone may be shut off with a certain delay so that the NOx occlusion acceleration effect is adequately produced by the supply of air.

It should be noted in this connection that ozone gradually decomposes at a temperature of approximately 100°C. Its decomposition percentage reaches approximately 100% in a 330°C atmosphere. Therefore, when the air supply temperature is to be determined, it is preferred that the thermal decomposition characteristics of ozone be taken into account. For example, the NOx oxidation effect is not produced by ozone at 330°C at which ozone decomposes almost entirely. Therefore, the gas to be supplied may be changed to air in a temperature region where the decomposition percentage of ozone is low.

### (Second Modification)

The first embodiment is configured so that the NOx oxidation gas supply device 30 includes an ozone generator and turns ON the ozone generator as needed to supply ozone. However, the present invention is not limited to the use of such a configuration. For example, an alternative configuration may be employed so as to separately provide an ozone supply device and an air supply device.

In the above instance, the ozone supply device may be configured by using various publicly known ozone generation devices and methods. For example, a configuration for generating ozone directly by plasma discharge may be formed within the exhaust path 12 or catalytic device 20. Further, the air supply device may be configured by using various publicly known secondary air supply devices.

### (Third Modification)

The first embodiment supplies only ozone when the catalyst temperature is not higher than T₁, and supplies only air when the catalyst temperature is not lower than T₁. However, the present invention is not limited to the use of such a scheme. Alternatively, the NOx oxidation gas supply device 30 may be controlled so as to supply ozone when the catalyst temperature T is lower than a temperature at which the NOx occlusion acceleration effect is produced by the supply of air, suppress or shut off the supply of ozone when the catalyst temperature T reaches the temperature at which the NOx occlusion acceleration effect is produced by the supply of air, and start the supply of air at the latest by the time the supply of ozone is suppressed or shut off.

For example, after the catalyst temperature reaches T₁, ozone may be continuously supplied by reducing the amount of its supply and without entirely shutting off its supply. More specifically, when air is supplied in step S140, the supply of ozone need not be entirely shut off. Ozone may be supplied in smaller amounts than when the catalyst temperature T is not higher than T₁.

Further, the ozone supply device and air supply device may be separately provided so as to add both ozone and air to the exhaust gas in a situation where the catalyst temperature T is lower than T₁. More specifically, ozone and air may be both added to the exhaust gas in step S120. In other words, air may be added to the exhaust gas at the latest after the supply of ozone is suppressed or shut off. At the other times, the supply of air may be started or stopped as needed.

Furthermore, the amount of ozone supply may be gradually decreased to gradually switch to the supply of air, instead of suddenly switching from the supply of ozone only to the supply of air only as described in connection with the first embodiment.

### (Fourth Modification)

In the first embodiment, the catalyst and NOx retention member are combined and integrated to form the NOx occlusion reduction type catalyst 22. However, the present invention is not limited to the use of such a NOx occlusion reduction type catalyst. The present invention permits the use of various publicly known NOx occlusion reduction type catalysts. For example, a NOx retention member 322 and a catalyst 324 may be separately and sequentially positioned downstream of an ozone supply device 30 as shown in Fig. 6.

### (Fifth Modification)

The first embodiment uses the NOx oxidation gas supply device 30 to add ozone to the exhaust gas. More preferably, such an ozone addition may be made in the manner described below. It is known that NOx in the exhaust gas oxidizes due to a gas phase reaction when ozone (O₃) is added to the exhaust gas. More specifically, the NOx reacts with the ozone to induce the following reactions:

NO + O₃ - > NO₂ + O₂ [1]

NO₂ + O₃ - > NO₃ + O₂ [2]

NO₂ + NO₃ - > N₂O₅ [3]

(NO₂ + NO₃ < - N₂O₅ )

In the subsequent explanation, reaction formula [1] may be referred to as the "first formula;" reaction formula [2], the "second formula;" and reaction formula [3], the "third formula." In the third formula, only the arrow indicating a rightward reaction is included; however, the parenthesized leftward reaction may also occur.

NOx occlusion in the NOx retention substance is achieved when the NOx retention substance occludes high-order nitrogen oxides, which are generated when NOx is oxidized, (or occludes HNO₃, which is generated when such nitrogen oxides react with water). When, for instance, NO₃ changes to Ba(NO₃)₂ or other nitrate, it is occluded by a NOx occlusion member. To induce a NOx occlusion reaction with high efficiency, therefore, it is preferred that an increased amount of NOx in the exhaust gas change to NO₃, N₂O₅, and other nitrogen oxides of higher order than NO₂.

In view of the above circumstances, the fifth modification induces the reactions indicated by the second and third formulae by adding ozone in such a manner that the mole ratio of ozone to NO in the gas mixture is greater than 1. More specifically, ozone addition is made so that the following relational expression is met by the ratio between mol(O₃), which is a mole equivalent of the amount of ozone in the gas mixture, and mol(NO), which is a mole equivalent of the amount of nitrogen monoxide in the gas mixture:

mol(O₃)/mol(NO) > 1 [4]

In the subsequent explanation, formula [4] above may be referred to as the "fourth formula."

When the mole ratio of ozone to NO in the gas mixture is not greater than 1 (mol(O₃:)/mol(NO) ≤ 1), NO₃ and N₂O₅ will not be generated due to the reactions indicated in the second and third formulae although NO₂ is generated due to the reaction indicated in the first formula. As such being the case, the fifth modification is configured so that the amount of substance of ozone to be added is greater than the amount of substance of NO in the exhaust gas. Therefore, an adequate amount of ozone can be supplied to generate NO₃ and N₂O₅ by oxidizing NO (to induce the reactions indicated in the second and third formulae). As a result, the amounts of high-order nitrogen oxides in the exhaust gas can be certainly increased to achieve NOx occlusion effectively.

The process described above is implemented when the ECU 50 performs a "process for adjusting an ozone supply amount so that the mole ratio of ozone to nitrogen monoxide (NO) in the gas mixture flowing into the NOx occlusion reduction type catalyst 22 is greater than 1" (ozone supply amount adjustment process). The ozone supply amount for providing the above mole ratio can be defined, for instance, by allowing the ECU 50 to estimate the molar quantity of NOx contained in the exhaust gas in accordance with the operating status (engine speed Ne, air-fuel ratio A/F, load, intake air amount, etc.) of the internal combustion engine 10 and calculate the flow rate of ozone to be supplied in accordance with the estimated molar quantity of NOx.

### (Sixth Modification)

Alternatively, the ozone supply amount may be further increased so that the mole ratio of ozone to nitrogen monoxide in the gas mixture is not smaller than 2 (mol(O₃)/mol(NO) ≥ 2). When the mole ratio of ozone (O)₃ to nitrogen monoxide (NO) in the gas mixture is greater than 1, the ozone still remains in the gas mixture even after NO is changed to NO₂ due to oxidation indicated in the first formula. Therefore, the reactions indicated in the second and third formulae occur to generate NO₃ and N₂O₅. However, if a trace amount of ozone remains after the reaction indicated in the first formula, the amounts of NO₃ and N₂O₅ to be generated during the reactions indicated in the second and third formulae are decreased.

In view of the above circumstances, the sixth modification adjusts the ozone supply amount so that the mole ratio between ozone and NO in the gas mixture is not smaller than 2 (mol(O₃)/mol(NO) ≥ 2). This ensures that an adequate amount of ozone remains after the reaction indicated in the first formula and contributes to the reactions indicated in the second and third formula, thereby certainly increasing the amounts of high-order nitrogen oxides. As described above, the sixth modification makes it possible to supply an adequate amount of ozone for generating NO₃ and N₂O₅ by oxidizing NO and effectively accelerate the NOx occlusion reaction.

The process described above is implemented when the ECU 50 performs a "process for adjusting the ozone supply amount so that the mole ratio of ozone (O₃) to nitrogen monoxide (NO) in the gas mixture flowing into the NOx occlusion reduction type catalyst 22 is not smaller than 2."

### (Seventh Modification "Ozone Supply Scheme")

The first embodiment includes the NOx oxidation gas supply device 30 in addition to the catalytic device 20 and provides the catalytic device 20 with the gas injection orifice 32 to supply ozone. However, the present invention is not limited to the use of such a configuration. Ozone can be added to the exhaust gas by using various publicly known ozone generation devices and methods. For example, a configuration for generating ozone directly by plasma discharge may be formed within the exhaust path 12 or catalytic device 20.

In the first embodiment, the NOx occlusion reduction type catalyst 22 according to the first embodiment is configured so that Pt or other noble metal and BaCO₃ are supported by the ceramic support. However, the materials that constitute the "catalyst" and "NOx retention member" according to the present invention are not limited to those mentioned in the preceding explanation. For example, various publicly known catalyst materials, such as Pt, Rh, and Pd, can be used as noble metal materials that constitute the catalyst according to the present invention.

Further, the NOx retention substance for the NOx retention member is not limited to BaCO₃. For example, alkali metals, such as Na, K, Cs, and Rb, alkali earth metals, such as Ba, Ca, and Sr, and rare earth elements, such as Y, Ce, La, and Pr may be used as needed as described in Japanese Patent No. 3551346. Therefore, when the NOx retention substance occludes NOx as nitrate, the composition of the nitrate is not limited to Ba(NO₃)₂, which is mentioned in connection with the first embodiment. Furthermore, ceramic, alumina (Al₂O₃), and other appropriate materials may be used as a support material for a noble metal or NOx retention substance.

It should be noted that temperatures T₁ and T₂, which were derived from the above-described experiment, vary with various design factors such as the catalyst specifications for the exhaust emission control apparatus, the ozone supply amount (e.g., the flow rate and concentration for ozone supply), and the air supply amount (e.g., the flow rate and concentration for air supply). To effect NOx occlusion gas changeover with high accuracy, therefore, it is preferred that experiments, numerical analyses, and other studies be conducted as needed in accordance with the specifications for an individual exhaust emission control apparatus to determine a catalyst temperature at which the NOx occlusion reaction is induced by the supply of air.

### Second Embodiment

### [Configuration of Second Embodiment]

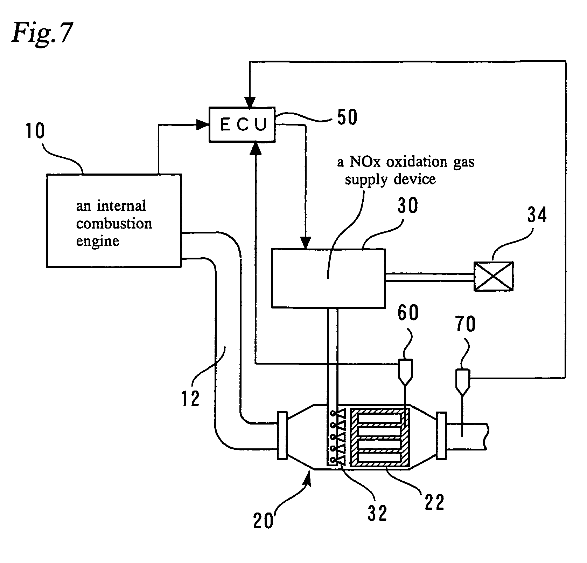

Fig. 7 is a diagram illustrating an exhaust emission control apparatus according to a second embodiment of the present invention. The apparatus shown in Fig. 7 differs from the apparatus according to the first embodiment in that the former includes an air-fuel ratio sensor 70, which is positioned downstream of the NOx occlusion reduction type catalyst 22. Elements identical with those of the first embodiment are designated by the same reference numerals as the corresponding elements and will be described briefly or omitted from the description.

The second embodiment includes the air-fuel ratio sensor 70, which is positioned downstream of the NOx occlusion reduction type catalyst 22. The air-fuel ratio sensor 70 varies its output depending on whether the gas flowing out of the NOx occlusion reduction type catalyst 22 is in a lean or rich atmosphere. The air-fuel ratio sensor 70 is connected to the ECU 50. The ECU 50 receives an output of the air-fuel ratio sensor 70 and judges whether the exhaust gas flowing downstream of the NOx occlusion reduction type catalyst 22 is in a lean or rich atmosphere.

The apparatus according to the second embodiment can add ozone or air to the exhaust gas in accordance with the catalyst temperature by using the NOx oxidation gas supply device 30, as is the case with the apparatus according to the first embodiment. Therefore, the second embodiment can achieve NOx occlusion at startup of the internal combustion engine 10 even if the catalyst temperature is low, as is the case with the first embodiment..

### [Operation of Second Embodiment]

While a NOx oxidation gas is being added to the exhaust gas as described above at startup of the internal combustion engine 10 according to the second embodiment, the fuel injection amount of the internal combustion engine 10 is open-loop controlled to perform a stoichiometric operation, as is the case with the first embodiment. Subsequently, when an adequate period of time elapses after startup of the internal combustion engine 10 to raise the temperature of the NOx occlusion reduction type catalyst 22 and fully exercise the catalyst activation function, the second embodiment shuts off the supply of NOx oxidation gas.

When the NOx oxidation gas supply shuts off, a reaction for releasing occluded NOx (NOx release reaction) actively occurs. The released NOx reacts with reductants (HC and CO) in the exhaust gas. Consequently, when the exhaust gas composition is stoichiometric in a situation where the NOx release reaction is in progress, the atmosphere becomes lean in accordance with the amount of released NOx so that the reducing materials run short.

To address the above problem, the second embodiment switches the fuel injection amount control mode of the internal combustion engine 10 from open-loop control to closed-loop control when the NOx oxidation gas supply shuts off. While closed-loop control is exercised, the output of the air-fuel ratio sensor 70 is fed back to the fuel injection amount. Therefore, the fuel injection amount can be corrected (enriched) so as to offset the amount of enleanment provided by the NOx release reaction. Consequently, even when the NOx release reaction occurs to cause enleanment, the fuel injection amount can be corrected to maintain proper exhaust gas composition.

Further, when the air-fuel ratio sensor 70 generates a rich output, the second embodiment reduces the fuel injection amount to adjust for a proper air-fuel ratio. The use of such a method makes it possible to make the aforementioned fuel injection amount correction precisely. In addition, it is possible to avoid a situation where a correction is continuously made for enrichment although the NOx release is ended after the air-fuel ratio is enriched for correction purposes. When the second embodiment performs the above-described operation, the fuel injection amount can be corrected precisely to maintain excellent emission characteristics no matter whether the NOx release reaction is in progress.

### [Details of Process Performed by Second Embodiment]

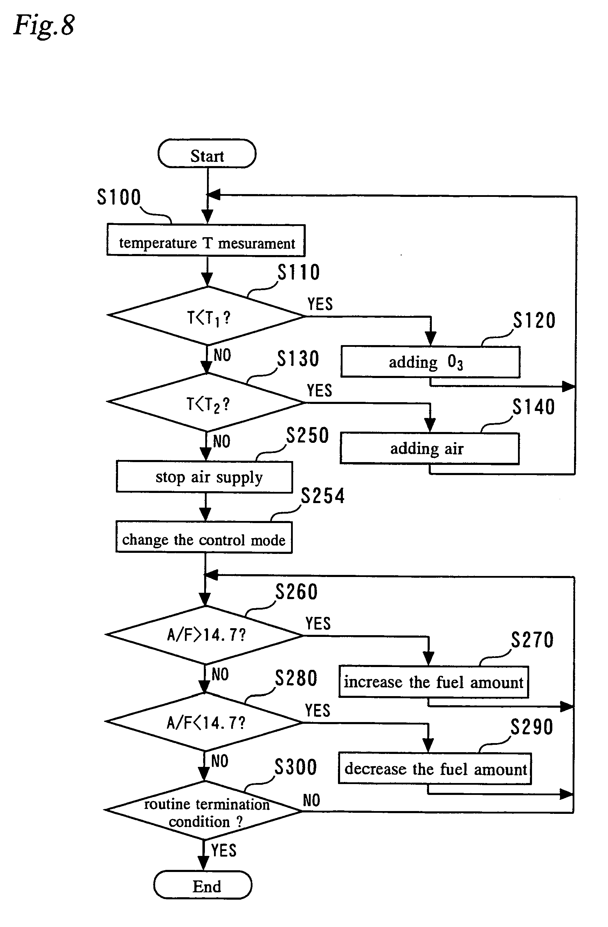

A process performed by the apparatus according to the second embodiment will now be described in detail below with reference to Fig. 8. Fig. 8 is a flowchart illustrating a routine that is executed in the second embodiment. The routine is executed when the internal combustion engine 10 starts at a low temperature (e.g., at a cold start). Steps S100 to S140 of a process performed by the routine shown in Fig. 8 will not be described because they are identical with the corresponding steps performed in the first embodiment. It is assumed that while the above steps are being performed in the second embodiment, the fuel injection amount of the internal combustion engine 10 is open-loop controlled to conduct a stoichiometric operation, as is the case with the first embodiment.

After the query in step S130 is answered "No," the routine shown in Fig. 8 proceeds to step S250 and shuts off the supply of air. When the air supply shuts off, the reaction for releasing NOx, which is occluded as nitrate, actively occurs. The released NOx then reacts with the reductants in the exhaust gas. Next, step S254 is performed to change the fuel injection amount control mode. Upon completion of step S254, open-loop control, which has been exercised to control the fuel injection amount, comes to a stop so that the ECU 50 proceeds to perform steps S260 to S290. The fuel injection amount control mode is now changed to closed-loop control.

In step S260, the ECU 50 first acquires the output of the air-fuel ratio sensor 70, and then judges whether the air-fuel ratio of the exhaust gas flowing out of the NOx occlusion reduction type catalyst 22 is lean. If the query in step S260 is answered "Yes," the routine concludes that the exhaust gas is enleaned by using the reductants in the exhaust gas for the NOx release reaction. In this instance, therefore, step S270 is performed to increase the fuel injection amount. Upon completion of step S270, the routine performs step S260 again and corrects the fuel injection amount until the exhaust gas is no longer lean.

If the judgment result obtained in step S260 does not indicate that the output of the air-fuel ratio sensor 70 is lean, the routine proceeds to step S280 and judges whether the output of the air-fuel ratio sensor 70 is rich. If the query in step S280 is answered "Yes," the routine proceeds to step S290, concludes that the fuel injection amount was excessively increased in step S270, and decreases the fuel injection amount for correction purposes. After the fuel injection amount is decreased for correction purposes, the routine returns to step S260 and judges again whether the output of the air-fuel ratio sensor 70 is lean.

When steps S260 to S290 are performed as described above, the fuel injection amount can be precisely corrected to offset the influence of enleanment provided by the NOx release reaction. This makes it possible to maintain proper exhaust gas composition and provide excellent emission characteristics even when the NOx release reaction is in progress.

If the judgment result obtained in step S280 does not indicate that the output of the air-fuel ratio sensor 70 is rich, the routine concludes that the air-fuel ratio is in a stoichiometric atmosphere. In this instance, step S300 is performed to judge whether a routine termination condition is established. The second embodiment assumes that an experiment or the like is conducted beforehand to measure the time required to fully release the NOx that is occluded by the NOx occlusion reduction type catalyst 22, and establishes the routine termination condition depending on whether the measured time has elapsed after the air supply is shut off in step S250.

If the query in step S280 is answered "No," the routine concludes that the NOx release reaction is still in progress, and repeats step S260. If the query in step S280 is answered "Yes," the routine comes to an end because it concludes that the NOx release reaction is terminated. Upon completion of the routine, the internal combustion engine 10 switches to normal operating conditions.

When the above-described process is performed, ozone can be used with high efficiency as is the case with the first embodiment. In addition, the fuel injection amount can be corrected in consideration of the influence of the NOx release reaction to correct the air-fuel ratio precisely and maintain proper exhaust gas composition even when enleanment is provided by the NOx release reaction. Moreover, it is possible to avoid a situation where a correction is continuously made for enrichment although the NOx release is ended after the air-fuel ratio is enriched for correction purposes. As a result, excellent emission characteristics can be maintained.

In the second embodiment, which has been described above, the air-fuel ratio sensor 70 corresponds to the "exhaust gas sensor" according to the third aspect of the present invention; and the fuel injection amount open-loop control, which is exercised in steps S100 to S140, corresponds to the "first injection amount control means." In the process detailed above, the "second injection amount control means" according to the third aspect of the present invention is implemented when steps S260 to S290 are performed. Further, the process for "changing the fuel injection amount control mode for the internal combustion engine from control by the first injection amount control means to control by the second injection amount control means" is implemented when the ECU 50 proceeds to steps S260 to S290 after completion of step S254.

### [Modifications of Second Embodiment]

### (First Modification)

In the process according to the second embodiment, step S254 is performed to change the fuel injection amount control mode from open-loop control to closed-loop control (feedback control). Subsequently, when the routine termination condition is found to be established in step S300, the routine switches to normal operating status. However, the present invention is not limited to such a process. If the employed configuration is such that the normal operating status includes feedback control over the fuel injection amount, the fuel injection amount control mode, unlike in the second embodiment, may directly change from open-loop control to the normal operating status, which includes feedback control.

More specifically, a conventional air-fuel ratio feedback control mechanism disclosed, for instance, in JP-A-2005-48711 is known as an air-fuel ratio control mechanism for an internal combustion engine. This air-fuel ratio feedback control mechanism includes an air-fuel ratio sensor, which is installed upstream of a catalyst; a sub-oxygen sensor, which is installed downstream of the catalyst; a main feedback mechanism, which feeds the output of the air-fuel ratio sensor back to the fuel injection amount so that the air-fuel ratio of the exhaust gas flowing into the catalyst agrees with a control target air-fuel ratio; and a sub-feedback mechanism, which feeds the output of the sub-oxygen sensor back to the fuel injection amount so that the air-fuel ratio of the exhaust gas flowing out of the catalyst agrees with a stoichiometric air-fuel ratio.

In step S254, the fuel injection amount control mode according to the present invention may be changed by changing the operation control mode of the internal combustion engine directly to the air-fuel ratio feedback control described above.

In the first modification, which has been described above, the "sub-oxygen sensor" installed downstream of the catalyst corresponds to the "exhaust gas sensor" according to the third aspect of the present invention; and the sub-feedback control, which is included in the normal operation control over the internal combustion engine, corresponds to the "second fuel injection amount control means" according to the third aspect of the present invention.

### (Other Modifications)

The second embodiment may also be configured so that the NOx retention member and catalyst may be installed separately and sequentially, as is the case with a modification of the first embodiment. In such an instance, the air-fuel ratio sensor 70 may be installed downstream of the catalyst. In the second embodiment, the catalyst, NOx retention substance, and their supports, which constitute the NOx occlusion reduction type catalyst according to the present invention, need not always be made of the materials used for the second embodiment, as is the case with the first embodiment. Further, ozone and air may be supplied by using various publicly known technologies, as is the case with the first embodiment.

Further, the first embodiment includes an air-fuel ratio sensor that is installed downstream of the NOx occlusion reduction type catalyst to feed its output back to the fuel injection amount. Alternatively, however, an oxygen sensor may be used instead of the air-fuel ratio sensor.

### Unclaimed Third Embodiment

The first embodiment has been mainly described with reference to the idea of "switching between the supply of ozone and the supply of air in accordance with the catalyst temperature" (this idea is implemented by steps S100 to S140 of the routine shown in Fig. 5 and may be hereinafter referred to as the "first idea"). The second embodiment has been mainly described with reference to the idea of "correcting the fuel injection amount when the NOx release reaction occurs" (this idea is implemented by steps S254 to S290 of the routine shown in Fig. 8 and may be hereinafter referred to as the "second idea").

The process according to the second embodiment, which has been described in detail above, incorporates both the first and second ideas mentioned above (steps S100 to S140 and steps S254 to S290 in Fig. 8). However, it does not mean that the second idea is always used in conjunction with the first idea. The second idea can be used alone as the first idea is used alone in the first embodiment. An unclaimed third embodiment will now be described with reference to an exhaust emission control apparatus for an internal combustion engine that is based on the second idea only.

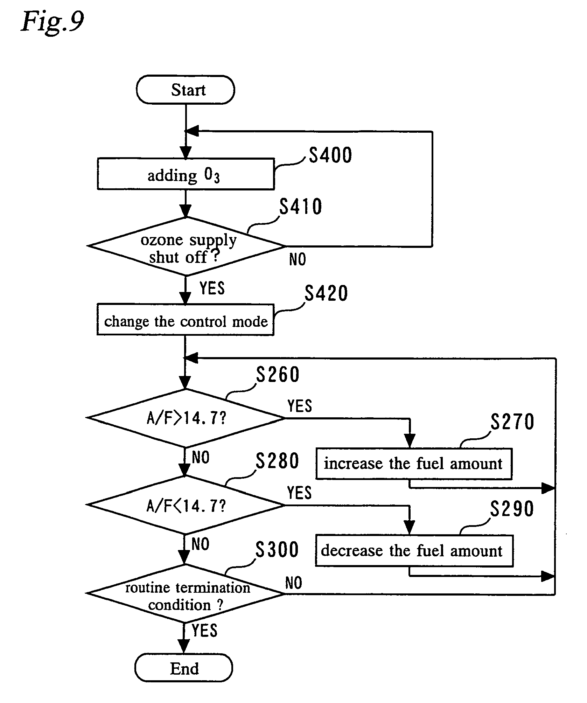

The unclaimed third embodiment is implemented when a routine shown in Fig. 9 is executed in relation to the same configuration as that of the second embodiment. Fig. 9 is a flowchart illustrating the routine that is executed in the unclaimed third embodiment of the present invention. The processing steps of the routine shown in Fig. 9 that are identical with those of the routine according to the second embodiment, which is shown in Fig. 8, are designated by the same reference numerals as the corresponding steps and will be omitted from the description.

First of all, the routine shown in Fig. 9 performs step S400 so that the NOx oxidation gas supply device 30 supplies ozone. The ozone is then added to the exhaust gas for the purpose of accelerating the NOx occlusion reaction. While step S400 is being performed, the fuel injection amount of the internal combustion engine is open-loop controlled in the same manner as in steps S100 to S140 of the second embodiment.

Next, the routine performs step S410 to judge whether an ozone supply shutoff condition is established. The unclaimed third embodiment judges whether an adequate period of time has elapsed after the start of ozone supply in step S400 to raise the catalyst temperature to an activation temperature, which is high enough to purify the exhaust gas. If the judgment result obtained in step S410 does not indicate that the ozone supply shutoff condition is established, the routine performs step S400 again to continue with the supply of ozone.

If, on the other hand, the judgment result obtained in step S410 indicates that the ozone supply shutoff condition is established, the routine performs step S420 to shut off the supply of ozone and change the fuel injection amount control mode. More specifically, the routine stops exercising open-loop control and performs steps S260 and beyond. Consequently, control is exercised to feed the output of the air-fuel ratio sensor 70 back to the fuel injection amount, as is the case with the second embodiment. Subsequently, the routine performs step S270 or S290 to correct the fuel injection amount and performs step S300 to judge whether the routine termination condition is established, as is the case with the second embodiment. When the routine termination condition is established, the routine comes to an end.

As far as the above process is performed to correct the fuel injection amount in consideration of the influence of the NOx release reaction, the air-fuel ratio can be corrected precisely to maintain proper exhaust gas composition even when enleanment is provided by the NOx release reaction. Moreover, it is possible to avoid a situation where a correction is continuously made for enrichment although the NOx release is ended after the air-fuel ratio is enriched for correction purposes. As a result, excellent emission characteristics can be maintained.

In the unclaimed third embodiment, which has been described above, the NOx oxidation gas supply device 30 corresponds to the "NOx oxidation gas supply means" according to the background aspect of the present invention; the air-fuel ratio sensor 70 corresponds to the "exhaust gas sensor" according to the background aspect of the present invention; and the open-loop control exercised over the fuel injection amount in steps S400 to S410 corresponds to the "first injection amount control means."

In the process detailed above, the "second injection amount control means" according to the background aspect of the present invention is implemented when steps S260 to S290 are performed. Further, the process for "changing the fuel injection amount control mode for the internal combustion engine from control by the first injection amount control means to control by the second injection amount control means" is implemented when the ECU 50 proceeds to steps S260 to S290 after completion of step S420.

The unclaimed third embodiment may be modified as described below. The unclaimed third embodiment accelerates the occlusion of NOx to the NOx retention substance by using only the method of adding ozone to the exhaust gas. However, the present invention is not limited to the use of such a method. Various methods for accelerating the occlusion of NOx can be combined as appropriate on the basis of the idea of "correcting the fuel injection amount during a NOx release reaction." For example, steps S400 and beyond may be performed to supply air simultaneously with ozone.

The unclaimed third embodiment uses ozone and air as a NOx oxidation gas. However, it does not mean that the NOx oxidation gas is limited to ozone and air. Variously composed gases containing ozone and air may alternatively be used as the NOx oxidation gas. In addition, some other gas may also be used as the NOx oxidation gas as far as it is capable of oxidizing NOx to accelerate the occlusion of NOx to the NOx retention substance.

It should be noted that the NOx retention member may not only occlude NOx but also adsorb NOx. More specifically, the NOx occlusion reduction type catalyst 22 may not only occlude NOx but also adsorb NOx. Therefore, when the NOx retention member performs an action of "retaining" NOx, it means not only an action of "occluding" NOx but also an action of "adsorbing" NOx. Further, the NOx occlusion reduction type catalyst may be configured so that the NOx retention member and catalyst are respectively positioned upstream and downstream of the ceramic support and separately supported. Another alternative is to configure the NOx occlusion reduction type catalyst so that the NOx retention member and catalyst are layered and separately supported in a cell of the ceramic support. In such an instance, it is preferred that the catalyst be positioned downstream of or layered above the NOx retention member to reduce the NOx released from the NOx retention member.

## Claims

1. An exhaust emission control apparatus for an internal combustion engine, comprising:
a NOx occlusion reduction type catalyst (22), which is positioned in an exhaust path (12) of the internal combustion engine and includes a NOx retention substance and a catalyst active site;
air supply means (30), which supplies air so that the air mixes with an exhaust gas flowing into the NOx occlusion reduction type catalyst;
ozone supply means (30), which supplies ozone (O₃) so that the ozone mixes with the exhaust gas flowing into the NOx occlusion reduction type catalyst;
ozone supply control means (50), which causes the ozone supply means to supply ozone when a temperature of the NOx occlusion reduction type catalyst is lower than a temperature at which a NOx occlusion acceleration effect is produced by the air supply, and suppresses or shuts off the ozone supply after the temperature of the NOx occlusion reduction type catalyst reaches the temperature at which the NOx occlusion acceleration effect is produced by the air supply; and
air supply control means (50), which causes the air supply means to start supplying air at the latest by the time the ozone supply is suppressed or shut off.

2. The exhaust emission control apparatus for the internal combustion engine according to claim 1, wherein the air supply control means shuts off the air supply while the ozone supply control means is supplying ozone, and starts supplying air when the ozone supply control means shuts off the ozone supply.

3. The exhaust emission control apparatus for the internal combustion engine according to claim 1 or 2, further comprising:
an exhaust gas sensor (70), which is positioned downstream of the NOx occlusion reduction type catalyst;
first injection amount control means (50), which exercises open-loop control over a fuel injection amount of the internal combustion engine; and
second injection amount control means (50), which feeds the output of the exhaust gas sensor back to the fuel injection amount so that the exhaust gas flowing out of the NOx occlusion reduction type catalyst has a stoichiometric air-fuel ratio, and exercises closed-loop control over the fuel injection amount; wherein
the air supply control means causes the air supply means to shut off the air supply after the temperature of the NOx occlusion reduction type catalyst is raised to a level not lower than an activation temperature for purifying the exhaust gas,
the first injection amount control means exercise fuel injection amount control while the air supply means is supplying air, and
the fuel injection amount control mode of the internal combustion engine is changed from control by the first injection amount control means to control by the second injection amount control means when the air supply means shuts off the air supply.

4. The exhaust emission control apparatus for the internal combustion engine according to any one of claims 1 to 3, further comprising:
ozone supply amount adjustment means (50), which adjusts the amount of ozone supply so that the molar quantity of ozone to be added to the exhaust gas is greater than the molar quantity of nitrogen monoxide (NO) contained in the exhaust gas.

5. The exhaust emission control apparatus for the internal combustion engine according to claim 4, wherein the ozone supply amount adjustment means controls the ozone supply means so that the molar quantity of ozone to be added to the exhaust gas is at least two times the molar quantity of nitrogen monoxide (NO) contained in the exhaust gas.

## Patentansprüche

1. Abgasemission-Steuerungsvorrichtung für einen Verbrennungsmotor, die aufweist:
einen NOₓ-Speicher-Reduktionskatalysator (22), der in einem Abgaspfad (12) des Verbrennungsmotors angeordnet ist und eine NOₓ-Speichersubstanz und eine katalytisch aktive Stelle aufweist;
eine Luftzuführeinrichtung (30), die Luft zuführt, so dass sich die Luft mit einem in den NOₓ-Speicher-Reduktionskatalysator (22) einströmenden Abgas vermischt;
eine Ozonzuführeinrichtung (30), die Ozon (O₃) zuführt, so dass sich das Ozon mit dem in den NOₓ-Speicher-Reduktionskatalysator (22) einströmenden Abgas vermischt;
eine Ozonzuführ-Steuerungseinrichtung (50), welche die Ozonzuführeinrichtung (30) zum Ozonzuführen veranlasst, wenn eine Temperatur des NOₓ-Speicher-Reduktionskatalysators (22) geringer als eine Temperatur ist, bei der ein Beschleunigungseffekt der NOₓ-Speicherung durch die Luftzufuhr bewirkt wird, und die Ozonzufuhr unterdrückt bzw. unterbricht, nachdem die Temperatur des NOₓ-Speicher-Reduktionskatalysators (22) die Temperatur erreicht, bei welcher der Beschleunigungseffekt der NOₓ-Speicherung durch die Luftzufuhr bewirkt wird; und
eine Luftzuführ-Steuerungseinrichtung (50), welche die Luftzuführeinrichtung (30) veranlasst, spätestens dann, wenn die Ozonzufuhr unterdrückt bzw. unterbrochen wird, mit der Luftzufuhr zu beginnen.

2. Abgasemission-Steuerungsvorrichtung für einen Verbrennungsmotor nach Anspruch 1, wobei die Luftzuführ-Steuerungseinrichtung (50) die Luftzufuhr unterbricht, während die Ozonzuführ-Steuerungseinrichtung (50) Ozon zuführt, und mit der Luftzufuhr beginnt, wenn die Ozonzuführ-Steuerungseinrichtung (50) die Ozonzufuhr unterbricht.

3. Abgasemission-Steuerungsvorrichtung für einen Verbrennungsmotor nach Anspruch 1 oder 2, die ferner aufweist:
einen Abgassensor (70), der stromabwärts vom NOₓ-Speicher-Reduktionskatalysator (22) angeordnet ist;
eine erste Einspritzmenge-Steuerungseinrichtung (50), die eine Steuerung einer Kraftstoffeinspritzmenge des Verbrennungsmotors ausführt; und
eine zweite Einspritzmenge-Steuerungseinrichtung (50), welche die Ausgabe des Abgassensors (70) der Kraftstoffeinspritzmenge zurückführt, so dass das aus dem NOₓ-Speicher-Reduktionskatalysator (22) ausströmende Abgas ein stöchiometrisches Luft-Kraftstoffverhältnis hat, und eine Regelung der Kraftstoffeinspritzmenge ausführt; wobei
die Luftzuführ-Steuerungseinrichtung (50) die Luftzuführeinrichtung (30) veranlasst, die Luftzufuhr zu unterbrechen, nachdem die Temperatur des NOₓ-Speicher-Reduktionskatalysators (22) auf ein Niveau angestiegen ist, das nicht unter einer Aktivierungstemperatur zum Reinigen des Abgases ist;
die erste Einspritzmenge-Steuerungseinrichtung (50) eine Steuerung der Kraftstoffeinspritzmenge ausführt, während die Luftzuführeinrichtung Luft zuführt; und
der Kraftstoffeinspritzmenge-Steuerungsmodus des Verbrennungsmotors von einer Steuerung durch die erste Einspritzmenge-Steuerungseinrichtung (50) zu einer Steuerung durch die zweite Einspritzmenge-Steuerungseinrichtung (50) umgeschaltet wird, wenn die Luftzuführeinrichtung (30) die Luftzufuhr unterbricht.

4. Abgasemission-Steuerungsvorrichtung für einen Verbrennungsmotor nach einem der Ansprüche 1 bis 3, die ferner aufweist:
eine Ozonzuführmenge-Einstellungseinrichtung (50), welche die Ozonzuführmenge einstellt, so dass die molare Menge des dem Abgas zuzuführenden Ozons größer als die molare Menge des im Abgas enthaltenen Stickstoffmonoxids (NO) ist.

5. Abgasemission-Steuerungsvorrichtung für einen Verbrennungsmotor nach Anspruch 4, wobei die Ozonzuführmenge-Einstellungseinrichtung (50) die Ozonzuführeinrichtung steuert, so dass die molare Menge des dem Abgas zuzuführenden Ozons zumindest der doppelten molaren Menge des in dem Abgas enthaltenen Stickstoffmonoxids (NO) entspricht.

## Revendications

1. Dispositif de contrôle des émissions d'échappement pour un moteur à combustion interne, comprenant :
un catalyseur du type à réduction par occlusion des NOx (22), qui est positionné dans un trajet d'échappement (12) du moteur à combustion interne et comprend une substance retenant les NOx et un site actif de catalyseur ;
des moyens d'apport d'air (30) qui fournissent de l'air de façon que l'air se mélange avec un gaz d'échappement circulant dans le catalyseur du type à réduction par occlusion des NOx ;
des moyens d'apport d'ozone (30) qui fournissent de l'ozone (O₃) de façon que l'ozone se mélange avec le gaz d'échappement circulant dans le catalyseur du type à réduction par occlusion des NOx ;
des moyens de contrôle d'apport d'ozone (50) qui font en sorte que les moyens d'apport d'ozone fournissent de l'ozone quand la température du catalyseur du type à réduction par occlusion des NOx est inférieure à la température à laquelle l'effet d'accélération d'occlusion des NOx est produit par l'apport d'air, et suppriment ou stoppent l'apport d'ozone après que la température du catalyseur du type à réduction par occlusion des NOx a atteint la température à laquelle l'effet d'accélération d'occlusion des NOx est produit par l'apport d'air ; et
des moyens de commande d'apport d'air (50) qui font en sorte que les moyens d'apport d'air commencent à fournir de l'air au plus tard au moment où l'apport d'ozone est supprimé ou stoppé.

2. Dispositif de contrôle des émissions d'échappement pour un moteur à combustion interne selon la revendication 1, dans lequel les moyens de contrôle d'apport d'air stoppent l'apport d'air alors que les moyens de contrôle d'apport d'ozone fournissent de l'ozone, et commencent à fournir de l'air quand les moyens de commande d'apport d'ozone stoppent l'apport d'ozone.

3. Dispositif de contrôle des émissions d'échappement pour un moteur à combustion interne selon la revendication 1 ou 2, comprenant en outre :
un capteur de gaz d'échappement (70) qui est positionné en aval du catalyseur du type à réduction par occlusion des NOx ;
des premiers moyens de contrôle de quantité d'injection (50), qui exercent un contrôle en boucle ouverte sur une quantité d'injection de carburant du moteur à combustion interne ; et
des deuxièmes moyens de contrôle de quantité d'injection (50), qui réintroduisent la sortie du capteur de gaz d'échappement dans la quantité d'injection de carburant de façon que le gaz d'échappement s'écoulant hors du catalyseur du type à réduction par occlusion des NOx ait un rapport air/carburant stoechiométrique, et exerce un contrôle en boucle fermée sur la quantité d'injection de carburant ;
dans lequel
les moyens de contrôle d'apport d'air font en sorte que les moyens d'apport d'air stoppent l'apport d'air après que la température du catalyseur du type à réduction par occlusion des NOx a augmenté jusqu'à une valeur non inférieure à la température d'activation pour purifier le gaz d'échappement,
les premiers moyens de contrôle de quantité d'injection exercent un contrôle de la quantité d'injection de carburant pendant que les moyens d'apport d'air fournissent de l'air, et
le mode de commande de quantité d'injection de carburant du moteur à combustion interne change d'un contrôle par les premiers moyens de contrôle de quantité d'injection à un contrôle par les deuxièmes moyens de contrôle de quantité d'injection quand les moyens d'apport d'air stoppent l'apport d'air.

4. Dispositif de contrôle des émissions d'échappement pour un moteur à combustion interne selon l'une quelconque des revendications 1 à 3, comprenant en outre :
des moyens d'ajustement de quantité d'apport d'ozone (50), qui ajustent la quantité d'apport d'ozone de façon que la quantité molaire d'ozone à ajouter au gaz d'échappement soit supérieure à la quantité molaire de monoxyde d'azote (NO) se trouvant dans le gaz d'échappement.

5. Dispositif de contrôle des émissions d'échappement pour un moteur à combustion interne selon la revendication 4, dans lequel les moyens d'ajustement de quantité d'apport d'ozone contrôlent les moyens d'apport d'ozone de façon que la quantité molaire d'ozone à ajouter au gaz d'échappement soit d'au moins deux fois la quantité molaire de monoxyde d'azote (NO) se trouvant dans le gaz d'échappement.
